(19)

Europäisches
Patentamt
European
Patent Office
Office européen
des brevets

(11)     EP 3 279 974 A1

(12)                     EUROPEAN PATENT APPLICATION

(43) Date of publication:
     07.02.2018  Bulletin 2018/06

(51) Int Cl.:
     H01M 2/16 (2006.01)          H01M 2/18 (2006.01)
     H01M 4/70 (2006.01)          H01M 10/052 (2010.01)

(21) Application number: 16182985.8

(22) Date of filing: 05.08.2016

(84) Designated Contracting States:
     AL AT BE BG CH CY CZ DE DK EE ES FI FR GB
     GR HR HU IE IS IT LI LT LU LV MC MK MT NL NO
     PL PT RO RS SE SI SK SM TR
     Designated Extension States:
     BA ME
     Designated Validation States:
     MA MD

(71) Applicant: Lithium Energy and Power GmbH & Co.
     KG
     70469 Stuttgart (DE)

(72) Inventors:
     • Deromelaere, Gaetan
       70806 Kornwestheim (DE)
     • Konishi, Daisuke
       70191 Stuttgart (DE)

     • Wille, Christopher
       70563 Stuttgart (DE)
     • Friedrich, Marco
       71638 Ludwigsburg (DE)
     • Klinsmann, Markus
       70195 Stuttgart (DE)
     • Ashida, Yuji
       70191 Stuttgart (DE)
     • Liebenow, Cornelius
       70372 Stuttgart (DE)
     • Katsumata, Yutaro
       Kyoto, Kyoto 602-8072 (JP)

(74) Representative: Bee, Joachim
     Robert Bosch GmbH, C/IPE
     P.O. Box 30 02 20
     70442 Stuttgart (DE)

(54)  **ELECTRODE WITH AN IMPROVED SECURITY BEHAVIOR AND BATTERY CELL COMPRISING THE SAME**

(57)     The present invention relates to an electrode for a battery cell (10), comprising a current collector (12, 22) with a main area (14, 24), which main area (14, 24) is connected to a layer (16, 26) of active material, characterized in that a plurality of electrically insulating spacer elements (20, 30) is provided attached to the current collector (12, 22), the plurality of spacer elements (20, 30) being positioned in the main area (14, 24) of the current collector (12, 22) and being at least partly embedded in the layer (16, 26) of active material. Such an electrode may provide an improved security behavior especially with regard to a nail penetration test.

## FIG. 2

**Description**

The present invention relates to an electrode which shows an improved security behavior. The present invention further relates to battery cell comprising such an electrode and to an electrochemical energy storing device, in particular a battery, such as a lithium ion battery, comprising such an electrode and/or such a battery cell.

State of the art

Electrochemical energy storing devices, such as lithium ion batteries, are known and used in wide application areas. Li-ion batteries are vital energy storage devices due to their high specific energy density. They are predominantly used in consumer electronics; however, improvements in safety are required for full acceptance of Li-ion cells in transportation applications, such as electric vehicles.

US 2004/0161667 A1 describes a bipolar battery comprising: a plurality of bipolar electrodes; electrolyte layers formed between adjacent ones of the plurality of bipolar electrodes, respectively; sealing portions surrounding and sealing the electrolyte layers, respectively; and contributing members contributing to keeping gaps between the adjacent ones of the plurality of bipolar electrodes, respectively.

US 2008/0020271 A1 describes a negative electrode for a non-aqueous electrolyte secondary battery, including: an active material layer capable of electrochemically absorbing and desorbing at least Li; and a current collector sheet that supports the active material layer thereon and that does not react with Li, wherein the active material layer includes a plurality of deposited films or sintered films supported on a surface of the current collector sheet, and each of the deposited films or sintered films is provided with at least one groove formed in a side surface thereof, the groove extending from a top surface side towards the current collector sheet side thereof.

US 2011/0014510 A1 describes a positive electrode including a positive electrode current collector lead connected to a core exposed part formed at a longitudinal center of a current collector core. A negative electrode includes a double-coated part including an active material layer and a porous protective film formed on each surface of a current collector core, a core exposed part, and a single-coated part which is located between the double-coated part and the core exposed part, and includes the active material layer and the porous protective film formed only on one of the surfaces of the current collector core. A plurality of grooves are formed in each surface of the double-coated part, while the grooves are not formed in the single-coated part. A negative electrode current collector lead is connected to the core exposed part; The negative electrode is wound in such a manner that the core exposed part constitutes a last wound end.

JP 2014-154486 A describes that in a power storage device, a conductive plate group is arranged between a case and an electrode assembly, and insulating convex spacers are scattered between a first conductive plate on the case side and a second conductive plate on the electrode assembly side. By means of the spacers, the first conductive plate and second conductive plate are brought into a state separated with a cavity formed by the spacers, and when being collapsed with a rod, or the like, the first conductive plate on the case side flexes to the second conductive plate side thus causing short circuit of the first conductive plate and second conductive plate reliably.

JP2010-044896 A describes a power storage device, wherein a plurality of slits passing through in the thickness direction are formed in a positive current collector and a negative current collector. A plurality of regions are partitioned in the positive current collector and the negative current collector by the slits. A part between the regions, and between the regions are cut off by the slits.

Disclosure of the invention

The present invention relates to an electrode for a battery cell, comprising a current collector with a main area, which main area is connected to a layer of active material, and particularly comprising a connecting area for electrically connecting the electrode, wherein a plurality of electrically insulating spacer elements is provided attached to the current collector, the plurality of spacer elements being positioned in the main area of the current collector and being at least partly embedded in the layer of active material.

Such an electrode allows an improved security behavior of a battery in particular when being in use.

An electrode with a current collector as such in known per se. It is a known part of a battery, or battery cell, respectively, and it generally comprises a current collector having a main area and a connecting area. The main area of the current collector is provided with a layer of active material and the connecting area is designed for electrically especially externally connecting the current collector, or the electrode, respectively. Exemplarily, the connecting area may be divided from the main area. For example, the main are is directly provided with, such as coated with, a layer of active material.

An electrode as defined above is further formed such, that a plurality of electrically insulating spacer elements is provided attached to the current collector, the plurality of spacer elements being positioned in the main area of the current collector. Therefore, the spacer elements are positioned such, that they are at least partly surrounded by, or embedded in, the active material. Preferably, the spacer elements are in direct contact with the active material and/or are, next to the portion which is connected to the current collector, fully embedded the active material.

Due to the fact that the main area, and thus at least the main area, is provided with a plurality of spacer elements, it becomes possible that in a case of a defect of a battery cell being equipped with said electrode and due to the presence of the spacer elements it may be prevented or the danger may at least be significantly reduced, that two current collectors having different polarity come into direct electrical contact to each other. The spacer elements thus prevent a direct contact of the different current collectors as it may be provided that at least one spacer element is provided between the respective current collectors.

Therefore, the number, size and the position of the spacer elements in the main area should be chosen such, that in case of a failure, particularly in case of an object being introduced into the battery cell, which may be simulated by the so-called nail penetration test, the spacer elements prevent a direct contact of the current collectors. For example, the distance between the spacer elements may be chosen such, that the respective distance is smaller compared to the height of all spacer elements being located above each other in the case of a failure. Thus, like described in detail below, in case spacer elements of different current collectors are located opposite each other, than the number of all spacer elements is two, whereas in case the spacer elements are laterally shifted, the number of the spacer elements is one, in the direction from one current collector to the further current collector. This can ensure that the current collector which may be deformed and may lie in the direction to the further current collector in case of a failure cannot reach the further current collector.

The spacer elements are thus electrically insulating and are for example formed from a polymeric material, such as rubber or plastic. The electrical insulating properties should at least be realized such, that in case the two current collectors and thus mostly an anode and a cathode of a battery cell are connected to each other via said spacer element, no significant effects occur and thus a thermal runaway may be prevented. It thus becomes clear that due to the insulating properties of the spacer elements, a thermal runaway may be avoided. Exemplary values of electrical resistance are higher compared to the layer of active material the spacers are located in. For example, the spacer elements may have an electrical resistivity lying in the range of rubber. Exemplary but in no way restrictive values thus comprise 1 x $10^{11}$ $\Omega$ x $mm^2$/m or even 1 x $10^{19}$ $\Omega$ x $mm^2$/m.

The spacer elements may be deposited on the current collectors, such as on respective metal foils, through typical processes like printing. This allows an especially easy and adaptable manufacturing process.

Therefore, due to the provision of the spacer elements, the active material layer, be it at an anode or cathode, is not coated on a "flat" metal foil like it is known in the prior art. According to such a prior art arrangement, a defect such as a nail penetration, could lead to the effect according to which, as the area around the nail is damaged, a direct contact between two current collectors, such as an aluminium foil and a copper foil or a contact of the current collectors with only a thin layer of active materials on them can occur. This will lead to a low ohmic resistance around the nail, depending on the thickness of the active material between the current collectors. The electrical conductivity of the active material, which may exemplarily lie around 10 S/m, is small small compared to the one of the current collectors, for example being formed of metal foils. With this regard copper has a conductivity of 5.9e7 S/m and aluminium has a resistivity of 3.5e7 S/m, which are as well suitable materials for the electrodes of the present invention.

Due to the spacer elements being provided at the main area of the current collectors and thus in the active material, a kind of structuring of the active material is reached to decrease the current at the nail penetration. The thicker the layer of active material is, the higher will be the resistance of the area around the nail. Therefore, the provision of at least a minimal thickness of active material between the two metal foils is needed to achieve a certain electrical resistance. This shows that it might be preferred that the insulating properties should be better compared to the respective layer of active material.

This is achieved by using spacer elements, or spacers, respectively, on one or each of the current collectors and thus as part of one or both electrodes, such as as part of the anode and/or cathode, as described before.

During nail penetration, the spacer elements prevent a direct contact between the current collectors so that the electric current still has to pass a layer of active material. The minimal thickness of this layer lies between one and two spacer heights and depends on the position of the spacer elements on the anode and the cathode.

Therefore, a contact between the current collectors can be avoided or the danger thereof can at least be significantly reduced. This allows a significantly improved security behavior of a battery cell being equipped with such an electrode.

With regard to security behavior, if a battery cell is brought outside the normal cycling or storage conditions, such as high or low temperature, internal or external short circuits, or overcharge, the inner temperature may excessively rise. With this regard, if the temperature in the cell is sufficiently high, it could lead to decomposition of electrolyte in the battery or separator shrinkage, which in turn leads to safety hazards, gas valve burst, up to explosion in the battery. Once started, this chain reaction can only hardly be stopped anymore. Thus an early detection system linked with a method that can stop either the ion flow or the electric current will prevent the destruction of the cell.

The presence of a volatile, combustible electrolyte and an oxidizing agent, such as at lithium oxide cathodes, makes a battery cell such as a Li-ion cell, susceptible to fires and explosions. Internal shorts or mechanical damage, e.g. caused within certain abuse tests such as the nail penetration test, create local current paths over which the cell discharges. The corresponding electric currents are accompanied by a strongly localized Joule heating. This leads to a strong increase of the local temperature at the internal short or nail penetration location. When a critical temperature is reached, exothermic chemical reactions are initiated between the electrodes and the electrolyte, raising the cell's internal pressure and temperature even more. The increased temperature accelerates these chemical reactions, producing more heat. This leads to a reaction which can only hardly be controlled so that a serious damage may follow, as indicated before.

Compared to prior art solutions, the present invention has advantages with regard to reaction time, as no time is required for allowing the security effect, and effectiveness, which is as well the case for large cells. The above defined arrangement of spacer elements can avoid or at least significantly reduce the danger of a thermal runaway caused by nail penetration as the spacer elements prevent a direct contact of the current collectors and may thus significantly reduce the current flowing inside the battery cell, e.g. at a nail penetration deep discharge, for example.

An electrode like described above thus is based on increasing the minimal distance between to respective current collectors being provided in a battery cell for example for a defect which may arise and may be used in a safety or abuse test, i.e. a nail penetration test. The presence of respective spacer elements leads to a higher electrical resistance between the two conductive current collectors and thus significantly reduces the danger of fatal effects. This is due to the fact that the electrical resistance between two current collectors increases with increasing distance between them. This may be clarified by the following formula: $R = \varrho l / A$, wherein R is the electrical resistance between the current collectors, l is the length between the current collectors, $\varrho$ is the specific resistivity of the material between the current collectors and A is the surface of the current collectors taken into consideration.

The main area may be formed as a metal foil and the connecting area may be formed as a standard cell tab. The current collector may for example be formed from aluminum or copper, for example. For example in case the current collector is formed form copper or aluminum, it may be preferred that it has a thickness of $\geq 5$ $\mu$m to $\leq 20$ $\mu$m, such as $\geq 7$ $\mu$m to $\leq 10$ $\mu$m, exemplarily 10 $\mu$m. Such current collectors may be used and implemented in known batteries without problems so that manufacturing process of batteries using a current collector need not be altered in a significant manner.

According to an embodiment, the spacer elements have a thickness of $\geq 5\%$ to $\leq 50\%$, such as of $\geq 10\%$ to $\leq 33\%$ of the layer of active material the spacers are embedded in, or provided in, respectively, wherein it may in an exemplary but non restricting manner may be the case that the entire thickness of the active material is about 100 $\mu$m. According to this embodiment, in a failure event like described above, which may be simulated by the nail penetration test, the minimum distance between the current collectors may lie in a comparable range, so that an especially reliable security improvement is allowed as a direct contact of the current collectors may be prevented especially reliably.

In order to get a superior security effect, there may be an interaction between the height of the spacer elements and the surface coverage of the current collectors with the spacer elements. The lesser the thicknesses are, the higher may be the surface coverage. On the other hand, the taller the spacers are, the lower can be the surface coverage of the current collector with the spacer elements.

In order to achieve a superior security effect, it may be provided that that the distance between two spacer elements, in the plane of the current collector, lies in the range of equal or less then 10mm, such as $\geq$ 5mm to $\leq$ 10mm.

In the above-named thickness ranges, it may be especially preferred, if the spacer elements have a thickness in a range of half of the above-named values in case the current collector is used in a battery cell in which two current collectors according to the invention are provided, wherein the spacer elements of different current collectors are provided opposed to each other, like it is described in detail with regard to the battery cell. In case two current collectors are used which both comprise spacer elements, wherein the spacer elements are provided next to each other, or laterally shifted, respectively, the spacer elements may have a thickness in the range like described above. This may be due to the fact that in the first case, two spacer elements being located one above the other may serve to provide the distance between the current collectors, whereas in the second case, only one spacer element has to provide the appropriate distance.

According to a further embodiment, the spacer elements are formed rectangular or in the shape of a disc or in the shape of a triangle. Such embodiments may be formed very easily allowing an easy manufacturing process of the whole current collector. Apart from that, it has surprisingly be found that especially the before-named geometries of spacer elements may be advantageous for preventing a direct contact of different current collectors.

According to a further embodiment, a plurality of orifices is provided in the main area, the orifices being arranged in a plurality of orifice strings, wherein the orifice strings define current paths between them. Particularly, each orifice string comprises a plurality of orifices. An orifice string may be formed as a straight line or as a curve or as shape locally forming a line and locally forming a curve, for example.

In detail, especially the provision of respective orifice strings, such as orifice lines or orifice curves, respectively, allows an improved security behavior in case an object is introduced into the battery cell. Like described before, such a defect is generally imitated by the so-called nail penetration test.

It has been found that a current collector as described before allows the further reduction of the current flowing from one electrode layer to the other. Thus, a measure to prevent catastrophic thermal failure in commercial batteries such as Li-ion batteries is therefore provided. In detail, the current flowing to the nail penetration area from different current paths is significantly reduced, thereby reducing the danger occurring in connection with such a failure.

It may be especially preferred that at least two orifice strings proceed in a varying distance to each other. Due to the fact that the orifice strings proceed in a varying distance to each other, it may be provided that at a part of the current path where a comparably small distance between two orifice lines is provided, has a limited current carrying capability whereas a further part of the current path, which has a comparable large distance between two orifice strings, has a comparably large current carrying capability. The part having a comparably small current carrying capability may thus be used as a sacrificial region, which may melt in case a predetermined current flows through this passage of the current path. Therefore, it may be allowed that a defined part of the current path could be melted away by the large current from other electrode layers in case a predetermined distance between the orifice strings and thus a predetermined widths of the current path is reached. Consequently, the different electrode layers will become disconnected from each other and additional current from other electrode layers will be blocked. The realized current carrying capability of the sacrificial region may thereby be adapted to the specifications of the electrode and the current at which this region should melt, like it can be done without problems by the person skilled in the art taking into consideration the current carrying capability of the material of the current collector and thus by adjusting the width of the respective current paths and the thickness of the respective current collector. Non-restrictive examples for the current carrying capability of the respective sacrificial region may lie in the range of $\geq 100$ to $\leq 200$ Amperes.

It may be provided that the ratio of the length of an orifice to the distance between two orifices in one orifice string lies in the range of equal or more than 50 to 1 to equal or less the 200/1, preferably in the range of equal or more than 75 to 1 to equal or less the 150/1, such as in the range of equal or more than 85 to 1 to equal or less the 120/1. This allows an especially significant reduction of current flowing to the nail penetration area from different current paths.

To summarize, an electrode as described before allows an effective measure for improving the security behavior of a battery equipped therewith by reducing the danger of a thermal runaway especially in case an object is introduced into the battery cell, which can be simulated by the so-called nail penetration test.

With regard to further technical features and advantages of the electrode as described above, it is referred to the description of the battery cell, the energy storage device, the figures and the description of the figures.

The present invention further relates to a battery cell, comprising at least one electrode like described in detail before.

With this regard, the battery cell may comprise a separator having a first side and a second side, wherein the first side of the separator is positioned adjacent to a first layer of active material and wherein the second side of the separator is connected to a second layer of active material, wherein a first current collector is positioned adjacent to the first layer of active material on the side being arranged opposite to the separator and wherein a second current collector is positioned adjacent to the second layer of active material on the side being arranged opposite to the separator. It may further be provided that a plurality of electrically insulating spacer elements is provided attached to at least one of the first current collector and the second current collector, the plurality of spacer elements being positioned in the main area of the respective current collector and being at least partly embedded in the respective layer of active material.

Such a battery cell may thus comprise a layer structure which may be as follows: first current collector - first active material layer - separator - second active material layer - second current collector, wherein connected to the respective current collector and embedded in the respective layer of active material is provided a plurality of spacer elemenets. The separator and the first and second layers of active material may be formed as it is generally known in the art for example for forming a lithium ion battery cell. With this regard, the first active material layer may be formed for acting as a cathode, whereas the second active material layer may be formed for acting as an anode.

The first current collector and/or the second current collector may be formed as it is described in detail above.

The battery cell may be formed as a so-called jelly roll or wounded type cell, respectively, or it may have a stacked arrangement, for example.

Such a battery cell may thus provide an improved security behavior and may thus prevent or at least significantly reduce the danger of a thermal runaway for example in case an object is inserted into the cell structure.

According to the battery cell as described above, it may be provided that a plurality of electrically insulating spacer elements is provided attached to the first current collector, the plurality of spacer elements being positioned at least in the main area of the first current collector and in that a plurality of electrically insulating spacer elements is provided attached to the second current collector, the plurality of spacer elements being positioned at least in the main area of the second current collector, wherein the spacer elements attached to the first current collector at least partly are positioned opposed to the spacer elements attached to the second current collector. In other words, the respective spacer elements are positioned such, that in case the current collectors are displaced towards each other, the opposing spacer elements of different current collectors come in contact to each other. This allows a comparably large distance from the current collectors even though the spacer elements as such require only a limited thickness. With this regard, the spacer elements may be provided even in case a comparably thin layer of active material is provided, which may be important for some applications.

It may further be provided that a plurality of electrically insulating spacer elements is provided attached to the first current collector, the plurality of spacer elements being positioned at least in the main area of the first current collector and in that a plurality of electrically insulating spacer elements is provided attached to the second current collector, the plurality of spacer elements being positioned at least in the main area of the second current collector, wherein the spacer elements attached to the first current collector at least partly are positioned not opposed to the spacer elements attached to the second current collector. In other words, the spacer elements of the first electrode are laterally shifted with regard to the spacer elements of the second electrode. According to this embodiment, in case the current collectors are displaced towards each other, the opposing spacer elements of different current collectors are positioned next to each other. This allows reducing the number of spacer elements being present at each current collector, and thus an especially large contact area of the active material layer to the current collector. This may be preferred due to the desired performance data of the battery cell especially in case a comparably thick layer of active material is allowed.

However, it may as well be provided that some spacer elements are positioned such, that the spacer elements attached to the first current collector are positioned opposed to the spacer elements attached to the second current collector, and that further spacer elements are positioned such, that the spacer elements attached to the first current collector are positioned not opposed to the spacer elements attached to the second current collector. Such an arrangement may as well be preferred for special applications.

With regard to further technical features and advantages of the battery cell as described above, it is referred to the description of the electrode, the electrochemical energy storage device, the figures and the description of the figures.

The present invention further relates to an electrochemical energy storage device, comprising at least one of an electrode like it is described in detail above and a battery cell like it is described in detail above.

Such an electrochemical energy storage device may for example be a battery or a battery module, which comprises, in particular as main unit, a battery cell like described above.

According to an embodiment, it may be advantageous that the battery cell which is part of the electrochemical energy storage device is connected to a fast discharge device. This embodiment allows an even more improved security behavior.

Such a fast discharge device may for example comprise an electrical connection being provided between the anode and the cathode of the battery, wherein the electrical connection has a defined electrical resistance. The electrical connection preferably is provided external to the battery cell and thus not through the active material layers. The discharge current which flows through the electrical connection is thus defined by the electrical resistance of this electrical connection. The electrical connection of the fast discharge device preferably may not be operated during a normal and thus desired working mode of the battery, but it may be switched such, that it electrically connects the anode with the cathode in case a failure appears. Such a failure may for example be determined by measuring the temperature inside the battery or the battery cell or by measuring the current flowing through the battery or the battery cell in answer to which a switch is activated for activating the fast discharge device.

Such a fast discharge device may thus allow that a high discharge current flowing there through, the temperature at the current collectors rise. This will trigger the security positions to melt because of which a thermal runaway is prevented or the danger of a thermal runaway to occur is at least significantly lowered.

In other words, by defining and adapting the fast discharge device, the temperature inside the battery and thus at the current collectors may be regulated such, that the current collectors securely and effectively realize their security function like described above and thus prevent dangerous effects to appear.

The resistance in the electrical connection may be adapted to the specific application in that it has a current carrying capability in dependence of the desired temperature rise for letting the security effect of the current collector be activated.

According to this embodiment, an additional measure is provided in order to prevent thermal failure in commercial batteries, such as Li-ion batteries, by the reduction of the localized current around the nail or internal short by an external low ohmic current path, namely the so called fast discharge device. The effectiveness of this device can be improved by using current collectors with orifices, like it is described in detail above.

An increase of the resistance of the nail penetration area limits the current flowing at this position and therefore limits the electrical power dissipation, because more current is flowing outside the damaged zone close to the nail due to the external low ohmic short circuit. The smaller power dissipation generates a lower heating up of the nail penetration area and decreases the risk of a thermal runaway for the cell, as the temperature stays below a critical onset value.

An electrochemical storage device as described above may thus provide an improved security behavior and may thus prevent or at least significantly reduce the danger of a thermal runaway for example in case an object is inserted into the cell structure.

With regard to further technical features and advantages of the electrochemical energy storage device as described above, it is referred to the description of the electrode, the battery cell, the figures and the description of the figures.

Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.

Fig. 1    shows a schematical view of a battery cell according to the prior art;
Fig. 2    shows a schematical view of a battery cell according to the invention;
Fig. 3    shows a schematical view of the disadvantage of the cell according to figure 1;
Fig. 4    shows a schematical view of the advantage of the cell according to figure 3;
Fig. 5    shows different embodiments of spacer elements for an electrode; and
Fig. 6    shows a further embodiment of a current collector for an electrode.

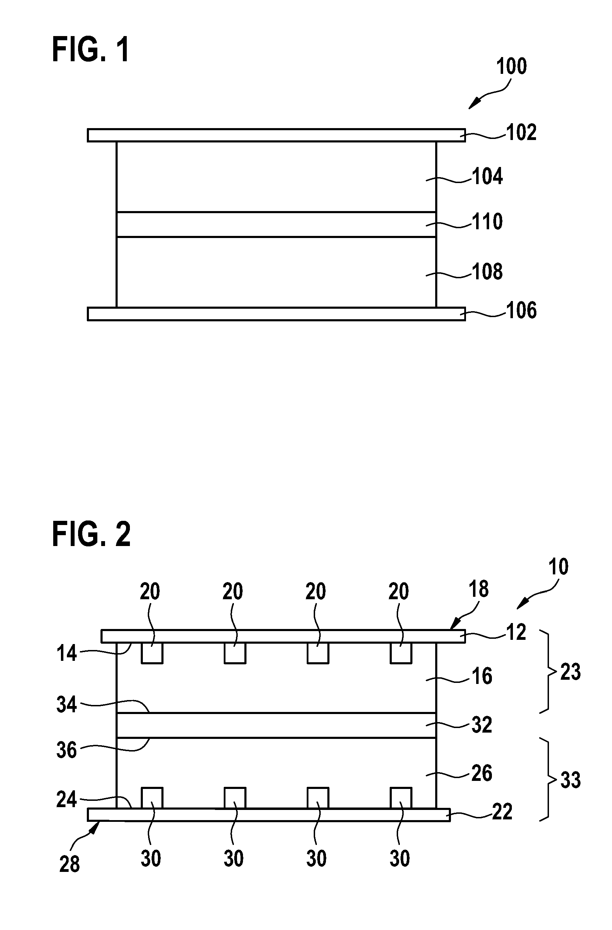

According to figure 1, a schematic structure of a battery cell 100 according to the prior art is shown. According to figure 1, a current collector 102 acting as an anode is shown which is provided with a layer 104 of active material. Further, a current collector 106 acting as a cathode is shown which is provided with a layer 108 of active material. The two layers 104, 108 of active material are separated by a separator 110, like it is generally known in the art for lithium ion batteries, for example.

According to figure 2, a battery cell 10 according to an embodiment of the invention is shown. In detail, the battery cell 10 comprises a current collector 12 as an anode for the battery cell 10, the current collector 12 comprising a main area 14 for connecting the current collector 12 to a first layer 16 of active material and comprising a connecting area 18 for electrically connecting the current connector 12 with a conductor, wherein a plurality of electrically insulating spacer elements 20 is provided attached to the current collector 12, the plurality of spacer elements 20 being positioned in the main area 14 of the current collector 12 and thus embedded in the layer 16 of active material. The Current collector 12 may form, together with the first layer 16 of active material and the spacer elements 20 an electrode 23, such as an anode.

Correspondingly, the battery cell 10 comprises a current collector 22 for a cathode of a battery cell 10, the current collector 22 comprising a main area 24 for connecting the current collector 22 to a second layer 26 of active material and comprising a connecting area 28 for electrically connecting the current collector 22 with a conductor, wherein a plurality of electrically insulating spacer elements 30 is provided attached to the current collector 22, the plurality of spacer elements 30 being positioned in the main area 24 of the current collector 22 and thus embedded in the layer 26 of active material. The Current collector 22 may form, together with the second layer 26 of active material and the spacer elements 30 an electrode 33, such as a cathode.

Further, the battery cell 10 comprises a separator 32 having a first side 34 and a second side 36, wherein the first side 34 of the separator 32 is positioned adjacent to the first layer 16 of active material and wherein the second side 36 of the separator 32 is connected to the second layer 26 of active material, wherein the first current collector 12 is positioned adjacent to the first layer 16 of active material on the side being arranged opposite to the separator 32 and wherein the second current collector 22 is positioned adjacent to the second layer 26 of active material on the side being arranged opposite to the separator 32. It is shown that the spacer elements 20, 30 are embedded in active material.

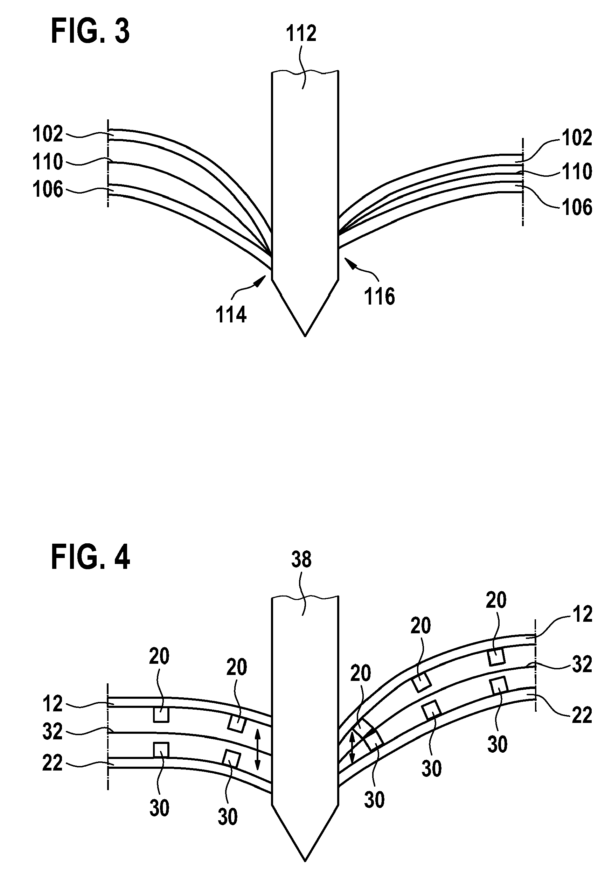

The positive effect of the embodiment of figure 2 is shown in figure 4, whereas figure 3 shows a solution according to the prior art.

According to figure 3 showing the prior art solutions, it is shown that a nail 112 penetrates the cell 100. In detail, it is shown, that the current collectors 102, 106 come in direct contact to each other in defect regions 114, 116, which may lead to a serious defect of the battery cell 100.

In contrast to figure 3, figure 4 shows that in case a nail 38 is penetrated into the battery cell 10, the spacer elements 20, 30 ensure a minimum distance between the current collectors 12, 14 such, that a direct contact of the current collectors 12, 14 is prevented. Therefore, serious damages of the battery dell 10 may securely be prevented.

In the embodiment shown in figures 2 and 4, respectively, the spacer elements 20 attached to the first current collector 12 are positioned opposed to the spacer elements 30 attached to the second current collector 22. Not shown in the figures but according to a further embodiment it may be provided that the spacer elements 20 attached to the first current collector 12 are positioned not opposed to the spacer elements 30 attached to the second current collector 22. The spacer elements 20, 30 are thus laterally shifted such, that in case the current collectors 12, 22 are pressed towards each other, the spacer elements 20, 30 will be located next to each other.

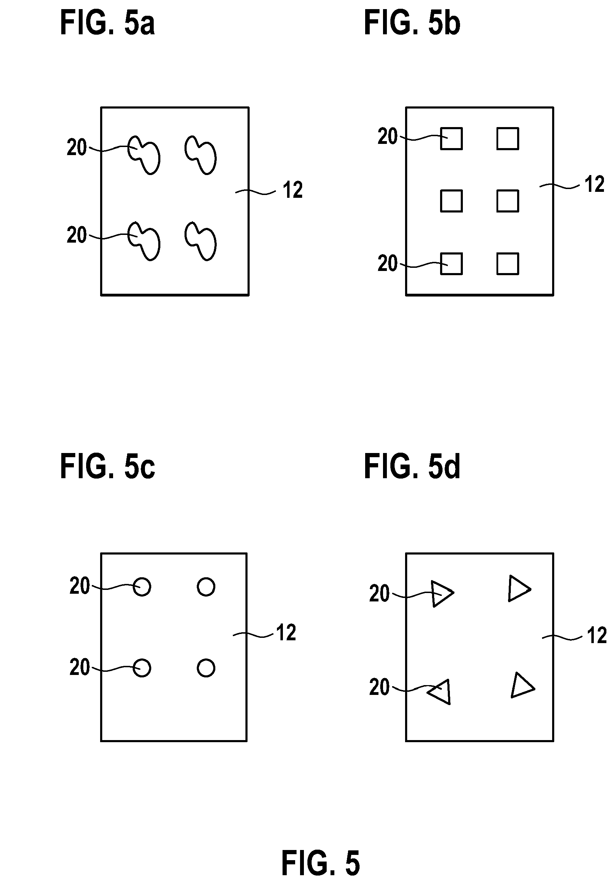

Figure 5 shows different embodiments of spacer elements 20 which are suitable in the present invention independently from the respective electrode. In detail, the spacer elements 20 may have a free form (figure 5a), may be formed rectangular (figure 5b), may be formed disc-like (figure 5c), or may be formed as a trinangle (figure 5d). Generally, the geometry of the spacer elements 20 as well as the pattern can be adapted to the different thicknesses of the current collectors 12, 22, for example being metal foils, the arrangement of the respective electrode 23, 33, be it an anode or a cathode, and the separator 110.

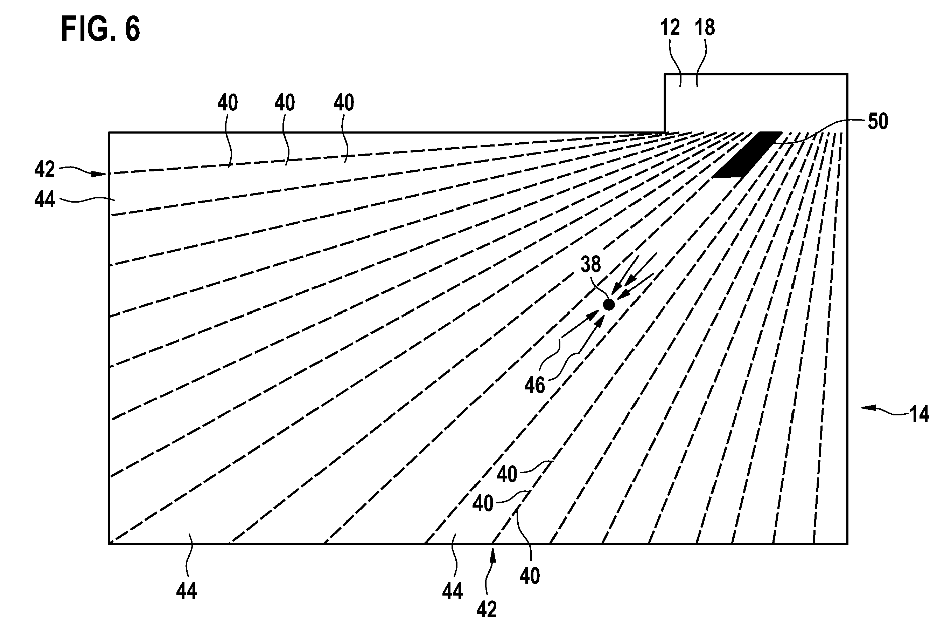

According to figure 6, a further embodiment of a current collector 12, 22 is shown. According to figure 6, a plurality of orifices 40 is provided in the main area, the orifices 40 being arranged in a plurality of orifice strings 42 as a straight line, wherein the orifice strings 42 define current paths 44 between them. Particularly, each orifice string 42 comprises a plurality of orifices 40. It can further be seen, that the orifice strings 42 proceed in a varying distance to each other, wherein it is provided that the orifice lines have a linear decreasing distance to each other in the direction to the connecting area 18. This embodiment may allow to reduce the current which flows to a nail penetration area. It may for example be provided that a sacrificial area 50, which carries a large amount of current in the current path 44 having the nail penetration area, melts, so that the current flowing to the nail 38, shown by the arrows, is decreased, as this current is reduced to the respective current path 44.

**Claims**

1. Electrode for a battery cell (10), comprising a current collector (12, 22) with a main area (14, 24), which main area (14, 24) is connected to a layer (16, 26) of active material, **characterized in that** a plurality of electrically insulating spacer elements (20, 30) is provided attached to the current collector (12, 22), the plurality of spacer elements (20, 30) being positioned in the main area (14, 24) of the current collector (12, 22) and being at least partly embedded in the layer (16, 26) of active material.

2. Electrode according to claim 1, **characterized in that** the spacer elements (20, 30) have a thickness of ≥ 5 % to ≤ 50 % of the layer (16,26) of active material the spacers (16, 26) are embedded in.

3. Electrode according to any of the preceding claims, **characterized in that** the distance between two spacer elements (20, 30), in the plane of the current collector (12, 22), lies in the range of equal or less then 10mm.

4. Electrode according to any of the preceding claims, **characterized in that** the spacer elements (20, 30) are formed rectangular or in the shape of a disc or in the shape of a triangle.

5. Electrode according to any of the preceding claims, **characterized in that** a plurality of orifices (40) is provided in the main area (14, 24), the orifices (40) being arranged in a plurality of orifice strings (42), wherein the orifice strings (42) define current paths (44) between them.

6. Battery cell, comprising at least one electrode (23, 33) according to any of claims 1 to 5.

7. Battery cell according to claim 6, **characterized in that** the battery cell (10) comprises a separator (32) having a first side (34) and a second side (36), wherein the first side (34) of the separator (32) is positioned adjacent to a first layer (16) of active material and wherein the second side (36) of the separator (32) is connected to a second layer (26) of active material, wherein a first current collector (12) is positioned adjacent to the first layer (16) of active material on the side being arranged opposite to the separator (32) and wherein a second current collector (22) is positioned adjacent to the second layer (26) of active material on the side being arranged opposite to the separator (32), wherein a plurality of electrically insulating spacer elements (20, 30) is provided attached to at least one of the first current collector (12) and the second current collector (22), the plurality of spacer elements (20, 30) being positioned in the main area (14, 24) of the respective current collector (12, 22) and being at least partly embedded in the respective layer (16, 26) of active material.

8. Battery cell according to claim 6 or 7, **characterized in that** a plurality of electrically insulating spacer elements (20) is provided attached to a first current collector (12), the plurality of spacer elements (20) being positioned at least in the main area (14) of the first current collector (12) and **in that** a plurality of electrically insulating spacer elements (30) is provided attached to a second current collector (22), the plurality of spacer elements (30) being positioned at least in the main area (24) of the second current collector (22), wherein the spacer elements (20) attached to the first current collector (12) are at least partly positioned opposed to the spacer elements (30) attached to the second current collector (24).

9. Battery cell according to any of claims 6 to 8, **characterized in that** a plurality of electrically insulating spacer elements (20) is provided attached to the first current collector (12), the plurality of spacer elements (20) being positioned at least in the main area (14) of the first current collector (12) and **in that** a plurality of electrically insulating spacer elements (30) is provided attached to the second current collector (22), the plurality of spacer elements (30) being positioned at least in the main area (24) of the second current collector (22), wherein the spacer elements (20) attached to the first current collector (12) at least partly are positioned not opposed to the spacer elements (30) attached to the second current collector (22).

10. Electrochemical energy storage device, comprising at least one of an electrode (23, 33) according to any of claims 1 to 5 and a battery cell (10) according to any of claims 6 to 9.

# FIG. 1

# FIG. 2

## FIG. 3

## FIG. 4

# FIG. 5a

# FIG. 5b

# FIG. 5c

# FIG. 5d

FIG. 5

FIG. 6

EP 3 279 974 A1

Europäisches
Patentamt

European
Patent Office

Office européen
des brevets

# EUROPEAN SEARCH REPORT

Application Number

EP 16 18 2985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/104712 A1 (KERLAU MARIE [US] ET AL) 16 April 2015 (2015-04-16) | 1-4,6-10 | INV. H01M2/16 H01M2/18 H01M4/70 |
| Y | * paragraphs [0067], [0164] - [0174]; figures 1A-H, 2A, 2B, 2C * | 5 | |
| X | US 2012/171549 A1 (OUCHI MASUTAKA [JP] ET AL) 5 July 2012 (2012-07-05) | 1,4,6-10 | ADD. H01M10/052 |
| A | * paragraphs [0100] - [0112]; figure 9 * | 2,3,5 | |
| Y,D | JP 2010 044896 A (FUJI HEAVY IND LTD) 25 February 2010 (2010-02-25) * figure 8 * | 5 | |

TECHNICAL FIELDS
SEARCHED     (IPC)

H01M

The present search report has been drawn up for all claims

| Place of search | Date of completion of the search | Examiner |
|---|---|---|
| The Hague | 23 November 2016 | Hofer, Astrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 18 2985

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2016

| Patent document cited in search report | | Publication date | Patent family member(s) | | Publication date |
|---|---|---|---|---|---|
| US 2015104712 | A1 | 16-04-2015 | CN | 105814724 A | 27-07-2016 |
| | | | EP | 3014680 A1 | 04-05-2016 |
| | | | KR | 20160070119 A | 17-06-2016 |
| | | | US | 2015104712 A1 | 16-04-2015 |
| | | | WO | 2015055744 A1 | 23-04-2015 |
| US 2012171549 | A1 | 05-07-2012 | CN | 102549808 A | 04-07-2012 |
| | | | JP | 5397475 B2 | 22-01-2014 |
| | | | KR | 20120046202 A | 09-05-2012 |
| | | | US | 2012171549 A1 | 05-07-2012 |
| | | | WO | 2011033702 A1 | 24-03-2011 |
| JP 2010044896 | A | 25-02-2010 | NONE | | |

EPO FORM P0459

For more details about this annex : see Official Journal of the European Patent Office, No. 12/82

**EP 3 279 974 A1**

## REFERENCES CITED IN THE DESCRIPTION

**Patent documents cited in the description**

- US 20040161667 A1
- US 20080020271 A1
- US 20110014510 A1
- JP 2014154486 A
- JP 2010044896 A